# EUROPÄISCHE PATENTSCHRIFT

(11) **EP 0 551 464 B1**
(45) Veröffentlichungstag und Bekanntmachung des Hinweises auf die Patenterteilung: **15.05.1996**
(21) Anmeldenummer: 92915500.0
(22) Anmeldetag: 27.07.1992
(51) Int. Cl.: A21C 11/22, A21C 11/16, F26B 15/18

(54) **VERFAHREN UND VORRICHTUNG ZUM PRESSEN UND TROCKNEN VON LANGEN TEIGWAREN**
PROCESS AND DEVICE FOR PRESSING AND DRYING ELONGATED PASTA
PROCEDE ET DISPOSITIF DE COMPRESSION ET DE SECHAGE DE PATES ALIMENTAIRES ALLONGEES

(30) Priorität: 31.07.1991 CH 2292/91
(43) Veröffentlichungstag der Anmeldung: 21.07.1993
(73) Patentinhaber: Bühler AG, CH-9240 Uzwil (CH)
(72) Erfinder: MANSER, Josef, CH-9240 Uzwil (CH)
(86) Internationale Anmeldenummer: CH9200154
(87) Internationale Veröffentlichungsnummer: WO9302561

(56) Entgegenhaltungen:
- EP-A- 0 086 246
- EP-B- 0 129 892
- CH-A- 347 483
- GB-A- 2 043 424
- US-A- 4 126 706

## Beschreibung

Die Erfindung betrifft ein Verfahren zum Pressen und Trocknen von langen Teigwaren (Langwaren) mit einer Teigfeuchtigkeit beim Verpressen von etwa 28 % bis 35%.

Die Teigherstellung ist eine alte chinesische Tradition und wurde insbesondere über Italien in den abendländischen Raum gebracht. Italien verfügte über ideale klimatische Bedingungen, um die aus Teig geformten noch feuchten und biegsamen Teigfäden ähnlich Textilien, respektiv gewaschener Wäsche auf Stangen und entsprechenden Gestellen an der freien Luft aufzuhängen und zu trocknen. Im Unterschied zu Wäsche, die im Normal fall bei entsprechendem südlichen Klima innert einem Tag trocken ist, benötigt die Teigware unter gleichen Bedingungen mehrere Tage, bis eine Warenfeuchtigkeit von unter 13 erreicht wird. Nicht zu vermeiden war dabei, dass die Teigwaren einen leicht säuerlichen Geschmack annahmen, was von einem beginnenden Gärprozess in dem Teig verursacht wurde.

Bei rein physikalischer Betrachtung ohne die Berücksichtigung der Qualität des Endproduktes kann ein dünnes Spaghetti in weniger als einer Stunde getrocknet werden. Trotzdem wurden bis vor 20 Jahren noch regelmässig 10 - 20 Stunden Trocknungszeit für eine automatische und industrielle Herstellung als notwendig erachtet, ebenso unabänderlich galt eine Temperatur-Obergrenze für die Trocknung zwischen 60° und 70° C, später etwa 75° C. Der erste grössere Durchbruch gelang der Anmelderin mit dem Gedanken der völligen Kontrolle durch ein abschnittsweise Trocknungsklima, bei gleichzeitiger Anwendung von einer Trocknungstemperatur von 80° C bis 100° C für Langwaren, wobei die Trocknungszeit auf 2 bis 6 Stunden gesenkt werden konnte.

Die EP-B-0 129 892 zeigt ein Verfahren und eine Vorrichtung zur Herstellung langer Teigwaren. Der Teig wird hierbei in einer Pressform zu einem Teighalbzeug geformt, erwärmt und in mehreren Klimazonen eines Durchlauftrockners mittels klimatisierter Luft getrocknet und nachfolgend wird das fertige Produkt geschnitten. Die Vorrichtung hierzu weist eine Teigwarenpresse, eine Vortrocknungskammer für Teigstränge, eine Längenschneidmaschine für heisse vorgetrocknete Teigstränge, eine Einrichtung zum Aufhängen geschnittener Teigstränge auf, Trocknungsstäbe sowie einen Durchlauftrockner mit einem Förderer für das Teighalbzeug und mit vertikaler Luftführung auf.

Der Trockner selbst besteht aus einer Anzahl von Trocknungsabschnitten mit einzeln steuerbaren Klimata und aus einem Belüftungssystem mit Luftleitungen.

Alle Erfahrungen bestätigen jedoch, dass die Trocknungstechnik für Langware nicht nur Rahmenbedingungen verlangt. Die technischen Mittel müssen sich an die Erfordernisse der biologischen, biochemischen und physikalischen Gesetzmässigkeiten des zu verarbeitenden Gutes richten. Das Hauptziel der Teigwarenherstellung ist die innere Qualität der Ware, etwa Kocheigenschaften, Bissqualität (z.B. al dente) oder Farbe, Bruchfestigkeit usw. Sehr wichtig ist auch die Erhaltung einer möglichst geraden Form der einzelnen Langware, nicht zuletzt um eine störungsfreie Funktion der automatischen Verpackungsmaschinen zu gewährleisten.

Der Erfindung wurde nun die Aufgabe gestellt, nach einer neuen Lösung zu suchen, um eine weitere Rationalisierung, insbesondere der Trocknung, zu ermöglichen, wobei eine Hauptaufgabe darin besteht, sowohl den Aufwand an bewegter Mechanik zu reduzieren und so eine Vereinfachung der Anlage besonders in den heissen Klimazonen zu ermöglichen.

Die erfindungsgemässe Lösung ist durch den Anspruch 1 gelöst.

Erste Versuche haben sofort bestätigt, dass die Teigstränge ein viel grösseres Formerhaltungsvermögen haben als bis heute angenommen wurde. Dadurch aber ist es möglich geworden, für zwei besondere Grundproblematiken der Teigwarenherstellung, nämlich die Formerhaltung und den Trocknungsprozess, sich mehr auf die Optimierung des Trocknungsverfahrens zu konzentrieren. Die sofortige Behängung der Langwaren direkt nach dem Austritt aus der Pressform hat den Vorteil, dass dieser Vorgang noch bei tiefer Temperatur beziehungsweise bei Raumluft durchführbar ist. Es können Kontrollen und Handeingriffe gemacht werden um Störungen zu vermeiden. Nachteilig ist aber, dass im Bereich der Behängung Raum und Zeit für die Trocknung verloren geht und sich vielfach sogar die Temperatur der Ware bis zum Eintritt in dem Trockner absenkt. Die Erfindung erlaubt eine ganze Anzahl besonders vorteilhafter Ausgestaltungen. Bevorzugt werden die Teigstränge unmittelbar nach der definitiven Formgebung in ein, über Steuermittel kontrolliertes Klima geführt, und die Temperatur der Ware von der Presstemperatur auf über 70°C vorzugsweise auf über 80°C erwärmt. Gemäss einer weiteren Ausgestaltung zum Beispiel für die Herstellung von breiten Nudeln, breiten Lasagne oder eckigen Spaghetti wird vorgeschlagen, die Teigstränge durch wenigstens ein Kalibrierwalzenpaar in die definitive Form zu bringen und mit konstanter Stranggeschwindigkeit als gerade Stränge zu trocknen. Auf diese Weise lassen sich Spaghetti nach der sogenannten "Hausmacherart" herstellen, die eine erste Kalibrierwalze für die Herstellung eines Teigblattes und einer zweiten Kalibrierwalze zur Bildung der Spaghettiform beziehungsweise des Teigstranges verwendet.

Für die industrielle Fertigung ist es besonders vorteilhaft, wenn die definitive Formgebung derart erfolgt, dass ein horizontal bewegter Strang gebildet wird, der unmittelbar in ein Aufheiz- und Trocknungsklima geführt wird. Es kann so vermieden werden, dass auf dem relativ kaltstarren Teigstrang gleich nach der Verpressung Durchbiegekräfte einwirken. Dadurch wird es nun aber auch möglich, viel längere Schenkel zum Beispiel im Falle einer Stab-Haupttrocknung vorzusehen, wodurch der ganze Trockner verkürzt und im Sinne eines Durchlaufofens in einer einzigen Etage konzipiert sein kann.

Bevorzugt wird die Ware bei wenigstens 70° C entweder in Trocknungslängen, oder in Fertigwaren-Längen geschnitten, und in heissem Zustand in einen Massentrockner geführt und getrocknet. Dies gestattet, die Ware in heissem Zustand auf Trocknungsstäbe aufzuhängen und daran fertig zu trocknen. Dabei wird die Ware in der Vortrocknung bis zur Aufhängung gleichmässig von allen Seiten mit der Luft beaufschlagt und kann mit noch grösserer Formfestigkeit, jedoch bei sehr grosser Plastizität, beziehungsweise in warmplastischem Zustand auf ebenfalls warme Stäbe aufgehängt werden. Es entfallen somit die bekannten Probleme an der Aufhängestelle. Da nun kein Kondenswasser mehr als Folge der Temperaturdifferenz zwischen Stab und Ware entsteht, ist das Problem des Verklebens der Ware gelöst. Auch die Bruchgefahr wegen Verformung bei Aufhängung in der bekannten U-Form ist reduziert.

Es ist ferner aber auch möglich, anstelle der Behängung zum Beispiel die Haupttrocknung in einem Taschentrockner oder portionenweise in der Verpackung, beziehungsweise in einem Teil der Verpackung durchzuführen.

Es wird ferner vorgeschlagen, die vorgetrockneten Teigstränge nur bis zu einer genügenden Formfestigkeit auf unter 28% vorzugsweise auf unter 25% Feuchtigkeit zu bringen, nass zu schneiden und anschliessend die geschnittene Ware zum Beispiel portionenweise auf unter 13% Produktfeuchtigkeit fertig zu trocknen. Die Längenschneideinrichtung kann sich während dem Schnitt mit der Geschwindigkeit der Teigstränge bewegen. Die Trocknung erfolgt in einer grösseren Zahl Trocknungsstufen, wobei jede Stufe eine eigene steuerbare Klimaführung sowie je ein eigenes Umluftsystem aufweist, wobei vorzugsweise die Anfangs-Trocknung der Teigstränge bei einer Warentemperatur von bis zu 80°C und die Haupttrocknung bei einer Warentemperatur von 80°C bis 150°C, vorzugsweise von 90°C bis 125°C durchgeführt wird.

Gemäss einem weiteren Ausgestaltungsgedanken werden die Teigstränge horizontal und die Trocknungsluft vertikal quer zu den Teigsträngen geführt, wobei die Luftgeschwindigkeit vorzugsweise so hoch gewählt ist, dass sich eine Fluidisierung der Teigstränge einstellt, wobei die Teigstränge über ein Stetigfördermittel vorzugsweise ein luftdurchlässiges Endlosförderband oder luftdurchlässige Vibrotransporteinheiten geführt werden.

Die Erfindung betrifft ferner eine Teigwarenlinie zur Herstellung von langer Ware gemäß den Merkmalen des Anspruchs 9. Der Durchlauftrockner kann ein- oder mehrlagig ausgebildet werden und eine grosse Zahl Trocknungsabschnitte mit einzeln steuerbaren Klimatas sowie eine Umluftführung mit Turbosystem aufweisen.

Es ist vorteilhaft, wenn die Trocknung abwechselnd Heizabschnitte und Trocknungsabschnitte und eventuell Stabilisierungsabschnitte aufweist, wobei die Heizung der Teigstränge mit Heissluft oder durch Mikrowellenenergie erfolgen kann, mit je anschliessender intensiver Trocknung der Teigstränge. Bei einer vorteilhaften Ausführungsform wird die Teigware am Ende der Trocknung durch Mikrowellen stabilisiert.

Bei einer anderen Ausgestaltung wird während der Endtrocknung die Warentemperatur gestuft auf weniger als 60°C gesenkt, dabei kann die in der Ware gespeicherte Wärme zur Zustandsänderung des Wassers in die Dampfform und damit zur beschleunigten Trocknung ausgenützt werden. Besonders beim Einsatz von Mikrowellen zur Wärmung der Teigstränge ist es möglich, mit einer Trocknungstemperatur der Luft, die wesentlich tiefer liegen kann, zu arbeiten, da dann mit der Wärmeabfuhr auch das Wasser in Dampfform leicht wegführbar ist. Die Teigpresse kann eine Extrusionsform und/oder wenigstens eine Kalibrierwalze aufweisen mit horizontal geführter Teigstrangbildung. Weiterhin wird vorgeschlagen, dass die Teigwarenlinie einen Durchlaufstrang-Vortrockner, eine Heissbehängeeinrichtung sowie einen Stabhaupttrockner aufweist. Vorteilhafterweise wird an der Pressform beziehungsweise Formwalze eine Schneideinrichtung für den Anfangs- und Endschnitt des Teigstranges angeordnet.

Ganz besonders vorteilhaft können gemäss der neuen Erfindung aber auch Halbfeucht- und Feuchtteigwaren als Frischteigwaren hergestellt werden zum Beispiel vor allem Spaghetti, Handnudeln sowie Ravioli und Tortellini mit Fleisch-, Käse- und Gemüsefüllungen, die mit einem Feuchtigkeitsgehalt von 30 - 20 % auf den Markt gelangen. Für diese Produkte müssen die Mindesthaltbarkeitsangaben und das Verbrauchsdatum auf der Verpackung angegeben sein. Im Gegensatz zu lager-trockenen Teigwaren mit fast unbegrenzter Haltbarkeit sind die frisch- oder semifeuchten Teigwaren auf Grund der hohen Wasseraktivität nur beschränkt haltbar. Die Mikroorganismen können bei diesen hohen Wassergehalten je nach Umständen die Ware innert Tagen verderben. Die frischgepressten Teigwaren werden in Form von Teigsträngen à la Spaghetti oder zum Beispiel co-extrudierte, gefüllte Cannelloni nach dem Pressen sofort in ein Trocknungs- und Pasteurisationsklima mit oder ohne Mikrowellen auf Temperaturen über 80°C zu pasteurisiert respektiv von 30% auf ungefähr 20% Wassergehalt getrocknet. Anschliessend an diese Trocknungsstufe müssen die Teigstränge gekühlt und steril in die Verpackung gefüllt werden.

Mit diesem Verfahren können ungekochte, frische und halbfeuchte Produkte hergestellt werden, die den gesetzlichen Verordnungen und den mikrobiologischen Normen entsprechen. Die Behandlungszeiten liegen je nach den angewendeten Methoden liegen 1 und 20 Minuten. Für die Lagerung und den Vertrieb sind tiefere Temperaturen notwendig, um jede Gefahr eines unzulässigen Wachstums der Mikroorganismen zu unterbinden.

Die Erfindung wird nun an Hand einiger Ausführungsbeispiele mit weiteren Einzelheiten erläutert. Es zeigen:
- die Figur 1: eine völlig stablose Langwarenlinie;
- die Figur 2: eine Langwarenlinie mit zwei übereinanderliegenden Trocknungsbänder;
- die Figur 3: ein weiteres Ausführungsbeispiel einer Langwarenlinie;
- die Figur 4: zeigt die Luftführung gemäss Turbosystem;
- die Figuren 5a, 5b: eine Form Schneideinrichtung direkt an der Langform,wobei 5b ein Grundriss und 5a ein Schnitt V-V der Figur 5b ist.
- die Figur 6: zeigt eine Strangvortrocknung mit Stabhaupttrockner;
- die Figur 7: die Verwendung von Kalibrierwalzen für die Teigstrangbildung.

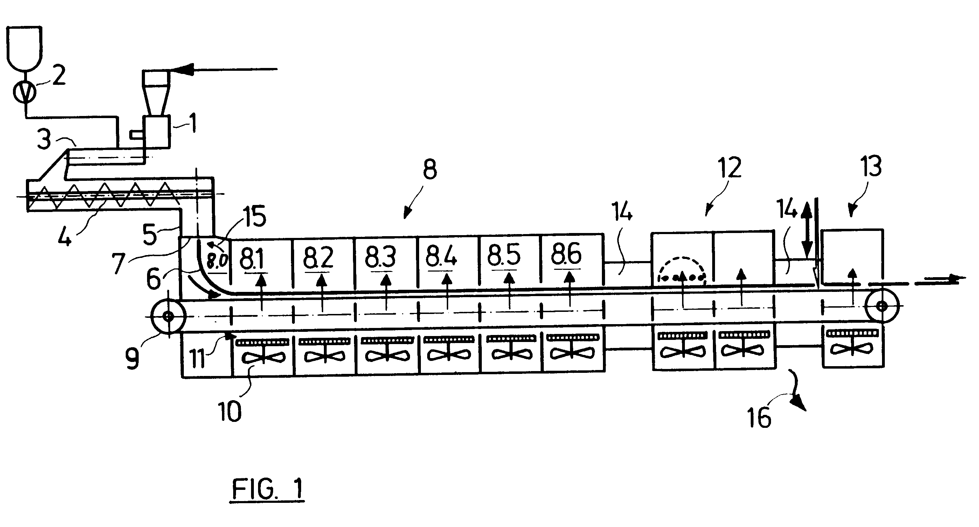

In der Folge wird nun auf die Figur 1 Bezug genommen. Das Rohmaterial wird als trockene Komponente über eine Dosierung 1, die als Flüssigkeitskomponente über eine Flüssigdosierung 2, einer Kneteinrichtung 3 sowie einer Pressschnecke 4 und einem Presskopf 5 zugeführt, von welchem Teigstränge 6 durch eine Pressform 7 gebildet und direkt in einen Trockner 8 geleitet werden. In dem Trockner 8 führt ein luftdurchlässiges Fördersystem 9 die Teigstränge kontinuierlich durch eine grosse Anzahl Trocknungsabschnitte 8.0, 8.1, 8.2 usw. Jeder Trocknungsabschnitt weist eine eigene Klimaführung und Klimakontrolle auf, was mit einem Ventilator 10 sowie einem Heizelement 11 symbolisch angedeutet ist. Das Fördersystem 9 ist durch ein Endlosband oder zum Beispiel durch einen Vibroförderer ausgebildet, über welchem vorteilhafterweise mit einer senkrechten Luftströmung, ein Fluidbett vorzugsweise mit leichter Förderbewegung erzeugt wird.

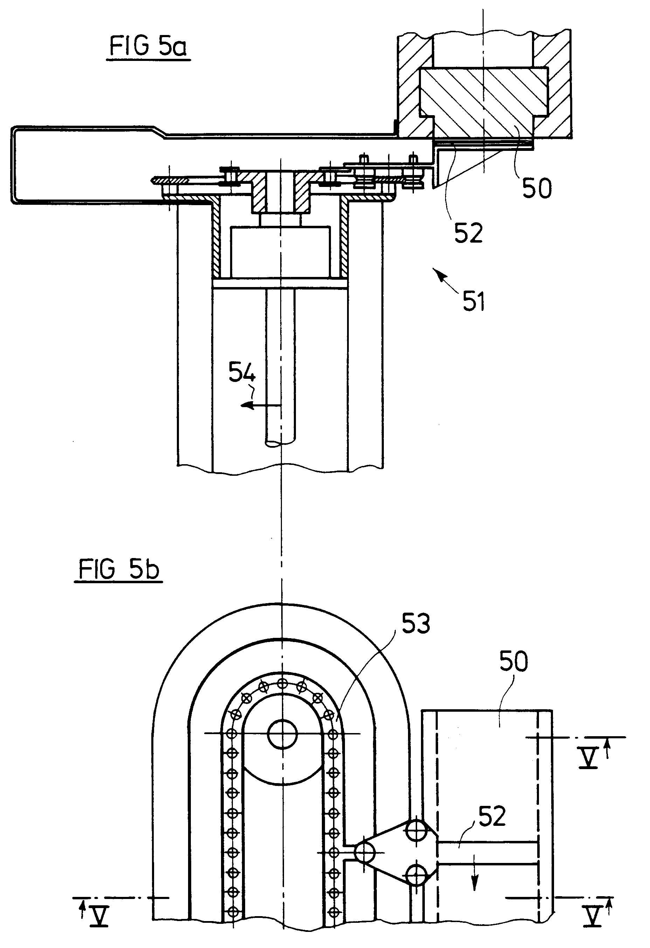

Anschliessend an den Trockner 8 ist ein Stabilisator 12 angeordnet, wobei zwischen Trockner 8 sowie Stabilisator 12 einerseits, sowie zwischen Stabilisator 12 und einer Längen-Schneideinrichtung 13 je eine Schleuse 14 vorgesehen ist. Der Stabilisator kann als Mikrowellenstabilisator ausgebildet werden, wobei in diesem Fall die beiden Schleusen 14 als Mikrowellenschleusen auszubilden sind. Mit der Bezugsziffer 15 respektiv dem damit bezeichneten Pfeil 15 ist eine Querschneideinrichtung für die Teigstränge bezeichnet, welche zu Beginn die fehlerhaft extrudierte Ware schneidet, und am Ende einer Chargenproduktion die Teigstränge auf ein einheitliches Ende abschneidet. Mit der Querschneideinrichtung können aber auch Teigstränge zum Beispiel von einigen Metern erzeugt werden, so dass Strangstücke mit Unterbrüchen in die Trocknung gegeben werden, so dass zum Beispiel im Falle von grösseren Differenzen der Austrittsgeschwindigkeit zwischen den einzelnen Teigsträngen entsprechende Störungen nur in der Anfangstrocknung wirksam sind. Der Pfeil 16 deutet an, dass 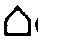 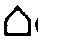 erstmalig mit einer Langwarenlinie auch Kurzwaren herstellbar sind, wobei die Kurzwaren mit einer Form-Schneideinrichtung gemäss Figur 5a und 5b geschnitten, jedoch gemäss Pfeil 16, vor der Längenschneideinrichtung, ausgetragen werden können.

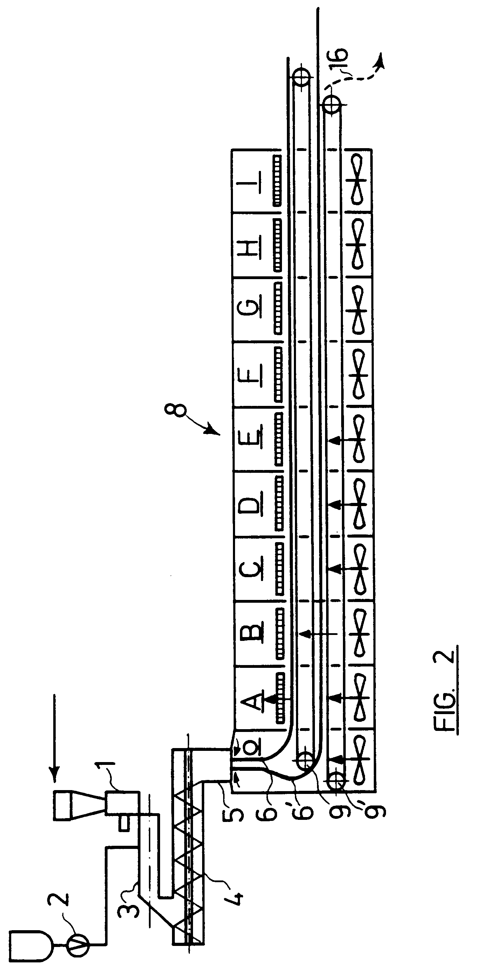

Die Figur 2 kann analog zu der Figur 1 konzipiert sein, stellt jedoch eine 2-etagige Ausführung dar, mit einem oberen Fördersystem 9 sowie einem unteren Fördersystem 9', auf welchen je die Teigsstränge 6 respektiv 6' durch den Trockner geführt werden. Die Figur 2 lässt sich aber auch derart ausgestalten, dass zum Beispiel auf dem oberen Band lange Ware und auf dem unteren kurze Ware hergestellt wird, so dass fast ohne Umstellarbeit mit der gleichen Linie kurze und lange Teigwaren herstellbar sind.

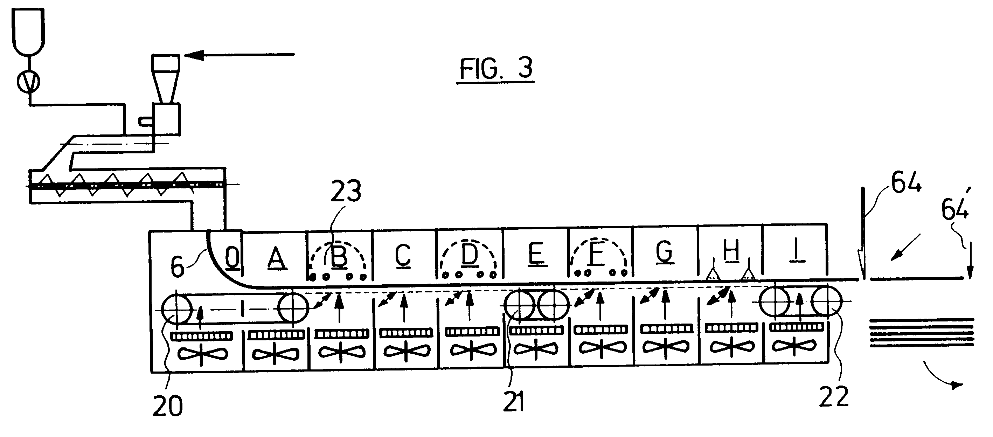

Die Figur 3 zeigt eine sehr kompakte Bauweise einer vollständigen Anlage mit der Teigaufbereitung sowie der Trocknung der Teigstränge. Wie in der Figur 1 ist auch in der Figur 3 der Trockner in einer grösseren Zahl einzelner Klimazonen O, A, B, C, D usw. aufgeteilt. Dabei ist in den Klimazonen B, D und F je eine Mikrowellenheizungsstufe 23 vorgesehen. Es können Wareneinzugsmittel zum Beispiel in Form eines Förderbandes 20, Warenaustragsmittel 22 sowie im mittleren Bereich ein Richtband 21 angeordnet werden. Das Warenaustragsband führt auf die Stränge einen leichten Zug aus. In allen Varianten wird eine grosse Zahl von Teigsträngen teppichartig über die ganze Breite von 1 - 2,5 Metern durch die Anlage zu geführt, wobei bei genügender Luftdurchströmung auch mehrere Teigstränge auf demselben Fördersystem übereinander liegen können. Vorteilhafterweise weisen die Fördereinheiten, Längsführungsrippen auf, welche den Teigsträngen eine Lenkung in Längsrichtung geben.

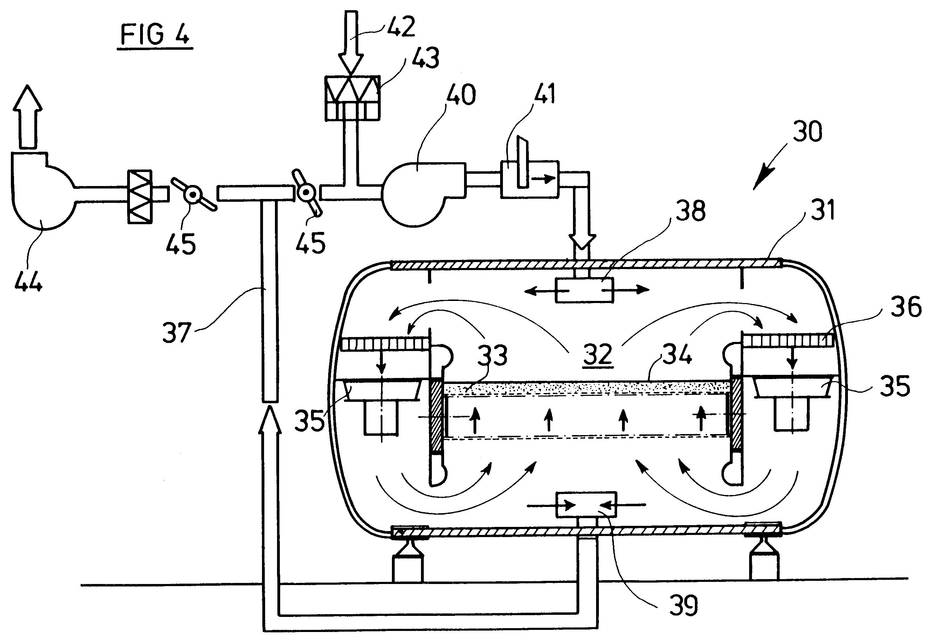

Die Trocknungsluft wird im Umluftbetrieb geführt, mit einem Turbosystem, das das Einblasen von zuvor aufbereiteter Luft und Mischen mit der Luft in dem Trockner erlaubt, wie in der Figur 4 als einem schematischen Querschnitt dargestellt ist. In einem nach aussen mit einer Isolation 31 verkleideten Trocknungselement 30, welches zum Beispiel je einer Klimazone O, A, B; C usw. entsprechen kann, ist der eigentliche Behandlungsraum 32, in dem Ware 33 auf dem als Bandförderer ausgebildeten Fördersystem 9 vorwärts, beziehungsweise senkrecht zur Zeichnungsebene bewegt wird. Ein inneres Luftsystem wird mit beidseits angeordneten Ventilatoren 35 gebildet, welchen je Heizelementen 36 zugeordnet sind. Das innere Luftsystem sorgt für eine gleichmässige Luftverteilung in dem ganzen Raum für die zu trocknende Ware und weist Steuermittel für die Einstellung der gewünschten Klimatas auf.

Zur Intensivierung des Trocknungsvorganges kann der Luft auch eine starke Schwingung übertragen werden. Für eine rasche und ökonomische Beeinflussung des Klimas in dem Behandlungsraum 32 ist zusätzlich ein äusseres Luftsystem 37 vorgesehen, das über Längskanäle einen Einblaskanal 38 sowie einen Absaugkanal 39 durch entprechend gesteuerten Lufttausch das gewünschte Klima regelt. Das äussere Luftsystem weist einen Ventilator 40, eine Befeuchtungseinheit 41, ein Frischluftansaug 42 mit Lufterwärmer 43, sowie Abluftventilator 44 auf, wobei die Luftmengen über steuerbare Einstellklappen 45 den jeweiligen Erfordernissen angepasst werden können. Die Regelung der einzelnen Klimatas kann rezeptgesteuert und mit Hilfe von entsprechenden Temperatur- und Feuchtigkeits-Sensoren erfolgen.

In der Figur 5a und 5b ist eine Langform 50 dargestellt mit angebauter Form-Schneideinrichtung 51, welche als Längsschneideinrichtung ausgebildet ist und ein oder zwei umlaufende Schneidmesser 52 aufweist. Das Schneidmesser 52 ist an einer Endloskette 53, geführt. In einer gradlinigen Bewegung entlang der Langform (als Längsschneideinrichtung), kann die aus der Langform austretende Ware entsprechend der Umlaufgeschwindigkeit der Schneidmesser 52 sowie der Austrittsgeschwindigkeit der geformten Ware in entsprechenden Längen geschnitten werden. Für die Herstellung von Teigsträngen bleibt die Formschneideinrichtung entsprechend Pfeil ausgerückt und wird nur für einen Anfangs- und Endschnitt betätigt.

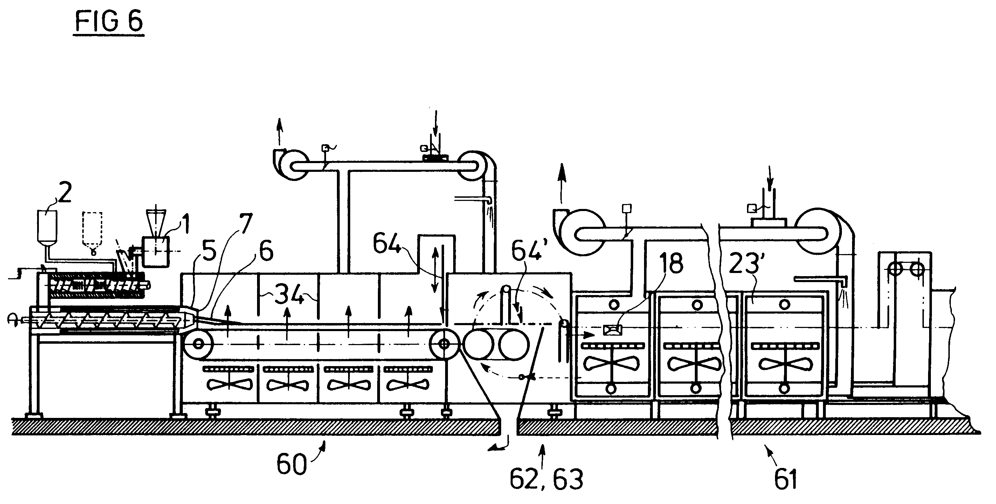

Die Figur 6 zeigt die Kombination von Teigstrangbildung für die Vortrocknung 60 sowie einen Haupttrockner 61 der als Stabtrockner ausgebildet ist. Zwischen dem Teigstrangtrockner 60 sowie dem Haupttrockner ist eine Behängeeinrichtung 62, in welcher die heisse Ware in Trocknungslängen geschnitten werden.

Über einen Kreisstabbehänger 63 können die Trocknungslängen in der an sich bekannten U-Form, auf die Stäbe aufgehängt werden. Eine gesteuerte Längenschneideinrichtung 64 kann eventuell als Doppelschnitt mit einem zusätzlichen Messer 64' exakte Längen herstellen. In der Figur 6 ist die Pressschnecke mit horizontalem Formaustritt ausgebildet, so dass der Teigstrang im wesentlichen in unveränderter horizontaler Bewegungsrichtung von dem Formaustritt direkt in den Vortrockner 60 läuft. Die bei der Längenschneideinrichtung 64 erzeugten Abschnitte können, da diese noch eine hohe Feuchtigkeit haben, zerkleinert und zurück in die Teigaufbereitung gefördert werden.

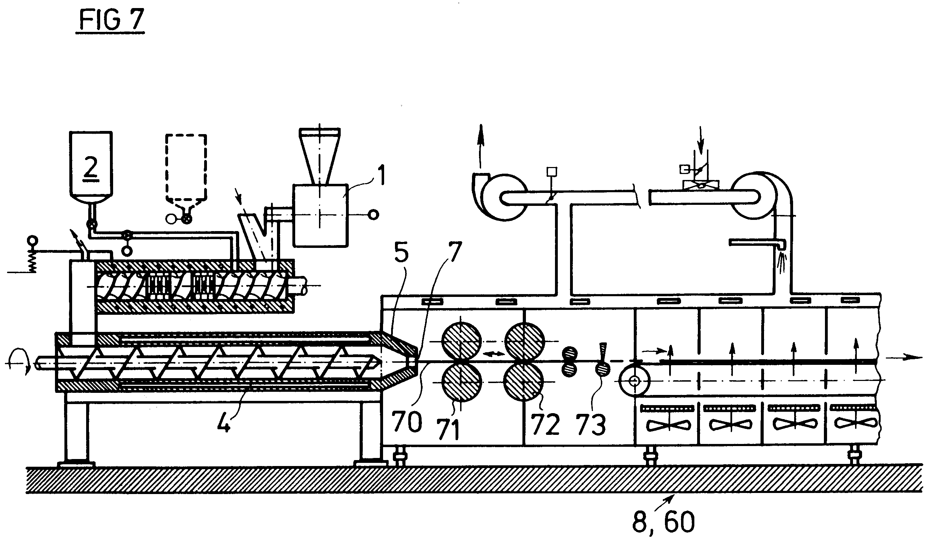

Die Lösung gemäss der Figur 7 kann analog zu der Figur 6 oder zum Beispiel der Figur 1 ausgebildet sein. Sie weist jedoch eine Spezialform auf, die ein, über den ganzen Trockner 8 respektiv 60 sich erstreckendes Teigband herstellt. Das Teigband wird in einer ersten Dickenkalibrierwalze 71 auf eine genaue Dicke gewalzt. Anschliessend wird in einer Formwalze 72 die gewünschte Warenform fortlaufend gepresst, zum Beispiel breite Nudeln, Lasagne oder eckige Spaghetti. Je nach gewünschter Form des Endproduktes kann zusätzlich über eine Längenschneideinrichtung 73 jede beliebige Warenlänge beziehungsweise Stranglänge auf diese Weise hergestellt werden.

## Patentansprüche

1. Verfahren zum Pressen und Trocknen von langen Teigwaren mit einer Teigfeuchtigkeit von etwa 28% bis 35%, indem der Teig mittels einer Pressform (7) zu Teigsträngen (6) geformt wird und die Teigstränge (6) durch laufendes Längszuführen und Bewegen auf einen luftdurchlässigen Fördersystem (9) mittels klimatisierter Luft in einen Trockner (8) mit Klimazonen (8.0, 8.1, 8.2, 8.3, 8.4, 8.5, 8.6, A, B, C, D, E, F, G, H, I) getrocknet und in die gewünschte Verpackungslänge geschnitten werden, wobei die Teigstränge nur bis zu einer genügenden Formfestigkeit auf unter 28%, vorzugsweise auf unter 25% Feuchtigkeit getrocknet, feucht geschnitten und anschliessend die geschnittene Ware auf unter 13% Produktfeuchtigkeit fertig getrocknet wird, und wobei weiterhin die klimatisierte Luft quer zu den Teigsträngen mit einer Geschwindigkeit geführt wird, welche das Verbleiben auf dem Fördersystem (9) gewährleistet, wobei das Fördersystem (9) durch ein Endlosband oder ein Vibroförderer ausgebildet ist, über welchem mit einer senkrechten Luftströmung, ein Fluidbett mit leichter Förderbewegung erzeugt wird.

2. Verfahren nach Anspruch 1, dadurch gekennzeichnet, dass die definitive Formgebung derart erfolgt, dass ein horizontal bewegter Strang gebildet und in ein Aufheiz- und Trocknungsklima geführt wird.

3. Verfahren nach Anspruch 1, dadurch gekennzeichnet, dass die Teigstränge unmittelbar nach der definitiven Formgebung in ein, über Steuermittel kontrolliertes, Klima geführt, und die Temperatur der Ware von der Presstemperatur über 70°C, vorzugsweise über 80°C, erwärmt wird.

4. Verfahren nach Patentanspruch 1 oder 3, dadurch gekennzeichnet, dass die Teigstränge durch ein Kalibrierwalzenpaar (71) in die definitive Form gebracht und mit konstanter Stranggeschwindigkeit als gerader Stränge getrocknet werden.

5. Verfahren nach einem der Ansprüche 1 bis 4, dadurch gekennzeichnet, dass die Ware nach einer Vortrocknung als heisser Strang bei wenigstens 70° C entweder in Trocknungslängen, oder in Fertigwarelängen geschnitten, und in warmem Zustand in einem an sich bekannten Massentrocknungsverfahren getrocknet beziehungsweise in die Haupttrocknung geführt wird.

6. Verfahren nach einem der Patentansprüche 1 bis 5, dadurch gekennzeichnet, dass die Ware in heissem Zustand auf Trocknungsstäbe aufgehängt und getrocknet wird.

7. Verfahren nach Patentanspruch 1, dadurch gekennzeichnet, dass sich die Längen-Schneideinrichtung (13) während dem Schnitt mit der Geschwindigkeit der Teigstränge bewegt.

8. Verfahren nach einem der Patentansprüche 1 bis 7, dadurch gekennzeichnet, dass die Trocknung in einer grösseren Zahl Trocknungsstufen (8.0, 8.1, 8.2, 8.3, 8.4, 8.5, 8.6, A, B, C, D, E, F, G, H, I) erfolgt, wobei jede Stufe eine eigene steuerbare Klimaführung sowie je ein eigenes Umluftsystem aufweist und vorzugsweise die Anfangs-Trocknung der Teigstränge bei einer Warentemperatur von bis zu 80°C und die Haupttrocknung bei einer Warentemperatur von 80°C bis 150°C, vorzugsweise von 90°C bis 125°C erfolgt.

9. Teigwarenlinie zur Herstellung von langen Teigwaren nach Anspruch 1, die eine Teigwarenpresse (4), einen in Trocknungsabschnitte unterteilten Durchlauftrockner (8), (8.0, 8.1, 8.2, 8.3, 8.4, 8.5, 8.6, A, B, C, D, E, F, G, H, I) mit einem Fördersystem (9) und vertikaler Luftführung sowie eine Längenschneidmaschine (13) aufweist; wobei die Trocknungsabschnitte (8.0, 8.1, 8.2, 8.3, 8.4, 8.5, 8.6, A, B, C, D, E, F, G, H, I) einzeln steuerbare Klimata sowie eine Umluftführung mit Turbosystem beinhalten, dadurch gekennzeichnet, dass das Förderersystem (9) ein Endlosband oder ein Vibroförderer aufweist, über welchen mit einer senkrechten Luftströmung, ein Fluidbett fit leichter Förderbewegung erzeugt wird und weiterhin die Längenschneidmaschine (13) im Durchlauftrockner (8) an dessen Ende angeordnet ist.

10. Teigwarenlinie nach Patentanspruch 9, dadurch gekennzeichnet, dass der Durchlauftrockner (8) ein- oder mehrlagig ausgebildet ist, und eine grosse Zahl Trocknungsabschnitte mit einzeln steuerbaren Klimatas sowie eine Umluftführung mit Turbosystem aufweist.

11. Teigwarenlinie nach Patentanspruch 9, dadurch gekennzeichnet, dass die Teigpresse (7) eine Extrusionsform oder eine Kalibrierwalze (71) aufweist mit horizontal geführter Teigstrangbildung.

12. Teigwarenlinie nach einem der Patentansprüche 9 bis 11, dadurch gekennzeichnet, dass sie einen Durchlaufstrang-Vortrockner (60), eine Querschneideinrichtung (15), eine Heissbehängeeinrichtung (62) sowie einen Stabhaupttrockner (61) aufweist.

## Claims

1. A process for pressing and drying long farinaceous products with a dough moisture of approximately between 28% and 35%, in which the dough is formed by means of a compression mould (7) into dough strands (6), and the dough strands (6) are dried by continuous longitudinal feed and movement on an air-permeable conveyer system (9) by means of conditioned air in a dryer (8) with climatic zones (8.0, 8.1, 8.2, 8.3, 8.4, 8.5, 8.6, A, B, C, D, E, F, G, H, I) and cut into a desired packaging length, and that the dough strands, which are dried only up to satisfactory shape retaining of below 28%, preferably dried below 25% moisture content, are cut wet, and subsequently the cut products are ready dried to below 13% product moisture, and furthermore the conditioned air is ducted transversely to the dough strands at a speed which ensures its residence on the conveyer system (9), and that the conveyer system (9) comprises a continuous belt or a vibro-conveyer above which a fluid bed with a vertical airflow and with a light conveyer movement is generated.

2. A process according to Claim 1, **characterized in that** the definitive shaping is carried out in such a manner that a horizontally moved strand is formed and ducted into a heating- and drying-climate.

3. A process according to Claim 1, **characterized in that** the dough strands are, immediately after the definite shaping, ducted into a climate which is controlled by regulating means, and the temperature of the products is raised by the compression temperature to above 70°C, preferably above 80°C.

4. A process according to Patent Claim 1 or 3, **characterized in that** the dough strands are forced into a definitive shape by means of a pair of calibrating rollers (71) and dried at a constant strand speed as straight strands.

5. A process according to one of Claims 1 to 4, **characterized in that**, after pre-drying as a hot strand of at least 70°C, the product is either cut into drying lengths or into finished-product lengths and in a warm state dried in a conventional bulk-drying process or ducted into a main drying process.

6. A process according to one of Patent Claims 1 to 5, **characterized in that** the product is in its hot state suspended on drying rods and dried.

7. A process according to Patent Claim 1, **characterized in that** the longitudinal cutting mechanism (13) moves with the speed of the dough strands whilst cutting.

8. A process according to one of Patent Claims 1 to 7, **characterized in that** drying is carried out in a larger number of drying stages (8.0, 8.1, 8.2, 8.3, 8.4, 8.5, 8.6, A, B, C, D, E, F, G, H, I), and that each stage comprises its own controllable climatic duct as well as its own circulation system, and that initial drying of the dough strands is preferably carried out at a product temperature of up to 80°C, and main drying is carried out at a product temperature of between 80°C and 150°C, preferably between 90°C and 125°C.

9. A farinaceous product line for the manufacture of long farinaceous products according to Claim 1, comprising a farinaceous product press (4), a continuous dryer (8) which is divided into drying sections (8.0, 8.1, 8.2, 8.3, 8.4, 8.5, 8.6, A, B, C, D, E, F, G, H, I) with a conveyer system (9) and vertical air ducting as well as a longitudinal cutting machine (13), and that the drying sections (8.0, 8.1, 8.2, 8.3, 8.4, 8.5, 8.6, A, B, C, D, E, F, G, H, I) include individually controllable climates as well as a circulation duct with turbo system, **characterized in that** the conveyer system (9) comprises a continuous belt or a vibro-conveyer with a vertical airflow above by means of which a fluid bed with light conveyer movement is generated, and that furthermore the longitudinal cutting machine (13) is arranged in the continuous dryer (8) at its end.

10. A farinaceous product line according to Patent Claim 9, **characterized in that** the continuous dryer (8) is designed in one or more layers and comprises a large number of drying sections with individually controllable climates as well as a circulation duct with turbo system.

11. A farinaceous product line according to Patent Claim 9, **characterized in that** the dough press (7) comprises an extrusion mould or a calibration roller (71) with horizontally guided dough-strand formation.

12. A farinaceous product line according to one of Patent Claims 9 to 11, **characterized in that** it comprises a continuous pre-dryer (60), a cross-sectional cutting mechanism (15), a hot-suspension device (62) as well as a rod main dryer (61).

## Revendications

1. Dispositif de compression et de séchage de pâtes alimentaires allongées, présentant une humidité de la pâte d'à peu près 28 % à 35 %, dans lequel la pâte est formée, au moyen d'un moule de pressage (7), en des boudins (6) et les boudins de pâte (6) sont séchés, en passant en direction longitudinale et en se déplaçant sur un système transporteur (9) perméable à l'air, au moyen d'air climatisé, dans un sécheur (8) présentant des zones de climatisation (8.0, 8.1, 8.2, 8.3, 8.4, 8.5, 8.6, A, B, C, D, E, F, G, H, I) et découpés à la longueur d'emballage souhaitée, les boudins de pâte n'étant séchés que jusqu'à prise d'une résistance de forme suffisante, à une valeur d'humidité inférieure à 28 %, de préférence inférieure à 25 %, étant découpés à l'état humide puis, le séchage du produit découpé étant terminé, atteignant une humidité du produit inférieure à 13 %, et en outre l'air climatisé étant guidé transversalement par rapport aux boudins de pâte, à une vitesse qui assure le maintien sur le système de transport (9), le système de transport (9) étant constitué par une bande continue ou bien un transporteur vibrant sur lequel un lit fluide présentant un léger mouvement de transport est produit, avec un écoulement d'air vertical.

2. Procédé selon la revendication 1, caractérisé en ce que le formage définitif s'effectue de manière à constituer un boudin déplacé horizontalement et guidé dans une ambiance de chauffage et de séchage.

3. Procédé selon la revendications 1, caractérisé en ce que les boudins de pâte sont guidés, directement après formage définitif, dans une atmosphère contrôlée par des moyens de commande et la température du produit étant augmentée, par la température de la presse, à une valeur supérieure à 70 °C, de préférence supérieure à 80 °C.

4. Procédé selon la revendication 1 ou 3, caractérisé en ce que les boudins de pâte sont mis à la forme définitive en passant dans une paire de rouleaux de calibrage (71) et sont séchés sous forme de boudins rectilignes, avec une vitesse de boudin constante.

5. Procédé selon l'une des revendications 1 à 4, caractérisé en ce que le produit, après un pré-séchage, est découpé, sous forme de boudins chauds, à une température d'au moins 70 °C, soit en longueurs de séchage, soit en longueurs de produit terminé, et est séché à l'état chaud dans un procédé de séchage, en masse connu en soi, respectivement est guidé dans le séchage principal.

6. Procédé selon l'une des revendications 1 à 5, caractérisé en ce que le produit est suspendu et séché à l'état chaud, sur des barres de séchage.

7. Procédé selon la revendication 1, caractérisé en ce que le dispositif de découpage en longueur (13) se déplace à la vitesse des boudins de pâte, pendant l'opération de découpage.

8. Procédé selon l'une des revendications 1 à 7, caractérisé en ce que le séchage s'effectue avec un nombre d'étages de séchage élevé (8.0, 8.1, 8.2, 8.3, 8.4, 8.5, 8.6, A, B, C, D, E, F, G, H, I), chaque étage présentant une régulation d'atmosphère propre pouvant être commandée, ainsi qu'un système de circulation d'air propre et, de préférence, le séchage initial des boudins de pâte étant effectué à une température du produit allant jusqu'à 80 °C et le séchage principal étant effectué à une température du produit allant de 80 °C à 150 °C, de préférence de 90 °C à 125 °C.

9. Ligne de pâtes alimentaires pour la production de pâtes alimentaires longues selon la revendication 1, présentant une presse à pâte alimentaire (4), un sécheur continu (8) subdivisé en sections de séchage (8.0, 8.1, 8.2, 8.3, 8.4, 8.5, 8.6, A, B, C, D, E, F, G, H, I) avec un système de transport (9) et un guidage vertical de l'air, ainsi qu'avec une machine de découpage en longueur (13), les sections de séchage (8.0, 8.1, 8.2, 8.3, 8.4, 8.5, 8.6, A, B, C, D, E, F, G, H, I) présentant des atmosphères pouvant être conmandées individuellement, ainsi qu'un guidage de l'air de recirculation avec un turbosystème, caractérisée en ce que le système transporteur (9) présente une bande continue ou bien un transporteur vibrant sur lequel, à l'aide d'un courant d'air vertical, est produit un lit fluidisé présentant un léger mouvement de transport et, en outre, la machine de découpage en longueur (13) étant disposée dans le sécheur continu (8), à son extrémité.

10. Ligne de pâte alimentaire selon la revendication 9, caractérisée en ce que le sécheur continu (8) est réalisé à une ou plusieurs couches et présente un grand nombre de sections de séchage ayant des atmosphères pouvant être commandées individuellement, ainsi qu'un guidage d'air de recirculation utilisant un turbosystème.

11. Ligne de pâte alimentaire selon la revendication 9, caractérisée en ce que la presse à pâte (7) présente un moule d'extrusion ou un rouleau de calibrage (71) avec une formation guidée horizontalement du boudin de pâte.

12. Ligne de pâte alimentaire selon l'une des revendications 9 à 11, caractérisée en ce qu'elle présente un pré-sécheur de boudins en continu (60), un dispositif de découpage transversal (15), un dispositif d'accrochage à chaud (62), ainsi qu'un sécheur principal sur barre (61).
